Europäisches Patentamt

European Patent Office

Office européen des brevets

(11) Publication number: **0 082 622**

**B1**

# EUROPEAN PATENT SPECIFICATION

(45) Date of publication of patent specification: **05.03.86**

(51) Int. Cl.⁴: **F 23 C 11/02, F 22 B 1/00**

(21) Application number: **82306415.9**

(22) Date of filing: **02.12.82**

(54) Fluidized bed combustion apparatus and method of carrying out fluidized bed combustion.

(30) Priority: **15.12.81 US 330794**

(43) Date of publication of application:
**29.06.83 Bulletin 83/26**

(45) Publication of the grant of the patent:
**05.03.86 Bulletin 86/10**

(84) Designated Contracting States:
**BE DE FR IT NL SE**

(56) References cited:
**DE-A-1 526 108**
**DE-A-2 836 531**
**US-A-3 921 544**
**US-A-4 196 676**
**US-A-4 240 377**

(73) Proprietor: **Johnson, William Benedict**
**522 Lewis Wharf**
**Boston Massachusetts 02110 (US)**

(72) Inventor: **Johnson, William Benedict**
**522 Lewis Wharf**
**Boston Massachusetts 02110 (US)**

(74) Representative: **Brooke-Smith, Fred et al**
**STEVENS, HEWLETT & PERKINS 5 Quality Court**
**Chancery Lane**
**London WC2A 1HZ (GB)**

Courier Press, Leamington Spa, England.

## Description

The present invention relates generally to fluidized bed combustion and, more particularly, to certain new and useful improvements in fluidized bed combustion devices and methods for carrying out fluidized bed combustion.

Fluidized bed combustion is currently one of the most promising technologies for advances in the field of combustion furnaces, boilers, incinerators, etc., particularly in these days of exhorbitant energy costs and restrictive environmental protection regulations. A significant reason that fluidized bed combustion holds such promise is my previous invention described in detail in my U.S. Patent No. 4,240,377 granted December 23, 1980 the disclosure of which is hereby incorporated by reference herein.

Briefly, fluidized bed combustion permits the use of a wide range of solid, liquid and gaseous fuels, while at the same time reducing pollutants such as nitrous oxide and sulfur dioxide, and providing high combustion and heat exchange efficiencies when compared with conventional combustion techniques. This invention of my '377 patent enables higher combustion and heat exchange efficiencies than previously known fluidized bed combustion devices. Furthermore, it provides several control points to permit immediate variation of steam generating capacity.

Although numerous significant advantages are realized by my invention described in said Patent No. 4,240,377 ("my '377 patent") over the prior state-of-the-art fluidized bed combustion techniques, there are certain aspects which can be improved to provide even further enhanced performance and improved efficiency. For example, the use of the solids circulation system coupled with the deletion of heat exchange tubes in the combustion bed resulted in much higher controlled heat transfer from the bed to the heat exchange surfaces. However, greater efficiency of combustion and heat exchange will enhance such controlled heat transfer.

In addition, despite the dramatically low production of sulfur dioxide, there is an economic need to minimize the amount of extraneous sulfur dioxide removing agent (e.g., limestone) added to the combustion chamber while still maximizing removal of the sulfur gas. Furthermore, despite the presence of cyclone gas-solids separators and/or various superheater tubes located above the combustion bed, it is important to retard the loss of fine particulate matter with the flue gas. The best way of doing so is by providing additional means for returning these fine particles to the combustion bed.

A significant drawback to conventional fluidized bed combustion devices is that limestone and ash must be removed from the combustion bed to maintain an equilibrium of reactivity within the bed. Such removal is usually done by "purging" the bed — i.e., by a continuous process of physically removing bed constituents from the bed for disposal. This results in loss of the heat from the combustion zone as well as unreacted fuel and limestone particles. It also presents a significant disposal problem since dumping can contaminate the aquifer.

Finally, the efficiency of combustion can be enhanced by increasing the amount of movement, or circulation, of the bed particles. Thus, the greater the circulation of bed constituents within the burning zone, the more efficient the combustion of fuel particles and the greater the reaction to reduce sulfur dioxide.

Thus in a fluidized bed combustion apparatus such as that described in my '377 patent, having a combustion chamber adapted to provide a fluidized bed of particulate matter, including combustible fuel particles, generally supported on a support member adapted to permit introduction of a fluidizing gas medium into the particulate matter and an inlet for introducing at least fresh combustible fuel particles into the fluidized bed, heat exchange means generally separated from the fluidized bed, said heat exchange means including communicating up-flow and down-flow portions for permitting circulation of particulate matter from the fluidized bed, through said heat exchange means and back into the fluidized bed, said down flow portion having a discharge outlet opening to the combustion chamber which discharge outlet is arranged to direct particulate matter passing down the down-flow portion in a generally horizontal direction over the fluidized bed and withdrawal means for withdrawing some of the particulate matter from the fluidized bed and introducing withdrawn particulate matter into said up-flow portion of said heat exchange means, I cause, by my present invention, the location or locations at which the withdrawn particulate matter is inducted into the withdrawal means from the fluidized bed to be offset laterally from the discharge outlet and I cause the arrangement to be such that the particulate matter returned to the fluidized bed through the discharge outlet promotes a circulatory movement of the fluidized bed.

In another aspect, my invention provides a method of carrying out fluidized bed combustion and transfer of heat generated from combustion of the fluidized bed, comprising the steps of providing for withdrawal of some particulate matter from the fluidized bed and causing the withdrawn particulate matter to flow through heat exchange means generally separated from the fluidized bed and back to the fluidized bed, characterised in that said particulate matter is withdrawn from the fluidized bed at a location generally laterally spaced from where the withdrawn particulate matter is discharged from the heat exchange means and in that the withdrawn particulate matter leaving the heat exchange means is discharged in a generally horizontal direction over the fluidized bed, the arrangement being such that particulate matter discharged from the heat exchange means is generally unaffected by the withdrawal of particulate matter and provides circulatory movement of the fluidized bed.

The bed constituents circulating from the fluidized combustion bed and through the heat exchange means are advantageously discharged back into the bed in such a manner as to generate relatively high velocity flow of returning particles and establish a high degree of circulation within the burning zone, i.e. the combustion bed. Advantageously also, the heat exchange means is vertically extending, with an upward flow portion and a downward flow portion which discharges the circulating particles back into the bed. The discharge end of the downward flow portion is preferably arched to direct the returning bed constituents in a generally horizontal direction and is located directly over a portion of the combustion bed (rather than over a quiescent zone). In addition, the inlet for introduction of fresh fuel (and, preferably, fine limestone particles as well) is preferably located somewhere just below the arched discharge channel of the downward flow heat exchange means to join the horizontal discharge flow of particles for enhancing the flow velocity of the returning particles.

According to a preferred feature of the invention, a portion of the combustion chamber generally opposite the arched discharge channel is provided with a sloped wall segment to enhance circulation within the bed by preventing any tendency of the circulating particles to collect in a "dead corner."

By maintaining inert bead-like particles distributed throughout the combustion bed, heat transfer from the fluidized bed constituents in the heat exchange means is enhanced. Moreover, the solids act as a grinding agent for both the limestone particles and the fuel particles in the bed. Thus, they continuously expose fresh surface area of the limestone to react with sulfur dioxide, providing for continuous removal of the sulfur gas. They also reduce the size of the ash particles to permit removal of spent fuel at the dust collection flue gas exit and grind ash from the surface of the fuel particles. At the same time, when circulated in a vertically extending heat exchange means, the "cascade" of these bead-like particles returning from the down-flow portion of the heat exchange means serves to return some of the particles entrained in the flue gas back to the combustion bed.

It will also be found that by introducing fresh fine limestone particles into the combustion bed, additional particulate matter is available to act as a heat exchange medium between the bed constituents and the system heat exchange means, whether it be cycled through vertically extending heat exchange means or whether it contact some type of superheater located above the fluidized bed. More importantly, the finely divided limestone provides additional fresh surface area for reacting with sulfur dioxide to remove the system. When used in a system having the inert bead-like particles circulating in the combustion bed, the introduction of such fresh limestone particles greatly increases the availability of fresh limestone surface area.

A particularly useful advantage of the combined use of the inert bead-like particles and fresh limestone is that there is no need to "purge" the combustion bed to remove partially sulfated limetone because the sulfated surface of the limestone is continuously ground away by the bead-like particles. Thus, there is no need to maintain a continuous withdrawal of the bed constituents and risk losing good fuel particles, unspent limestone particles or the heat contained in these particles. In addition, there are no significant handling problems, as the fully spent fuel and limestone (both in the form of dust-like ash particles) can be removed in the "bag house" after their heat has been transferred to steam generating surfaces.

By locating the quiescent zone remote from the discharge outlet of the vertical heat exchange means and forming a horizontally directing arched discharge section at the outlet of the down flow portion of the heat exchanger, the returning bed constituents are discharged into a generally horizontal direction to provide a circulatory influence on the combustion bed. In addition, by locating the fresh fuel/limestone inlet directly below the arched discharge outlet and in a horizontal orientation, the force of injecting these fresh particles combines with the momentum of horizontally discharged particles from the heat exchanger to enhance the distribution of the fuel/limestone and the circulatory influence on the combustion bed.

One embodiment of the invention will now be described by way of example with reference to the accompanying drawings in which:

FIG. 1 is schematic sectional view of a fluidized bed combustion boiler according to the invention.

FIG. 2 is a front elevation view of the boiler of Figure 1.

FIG. 3 is a sectional view taken along lines 3—3 of Figure 1.

FIG. 4 is a sectional view taken along lines 4—4 of Figure 1.

FIG. 5 is a sectional view taken along lines 5—5 of Figure 2.

### DETAILED DESCRIPTION OF PREFERRED EMBODIMENTS

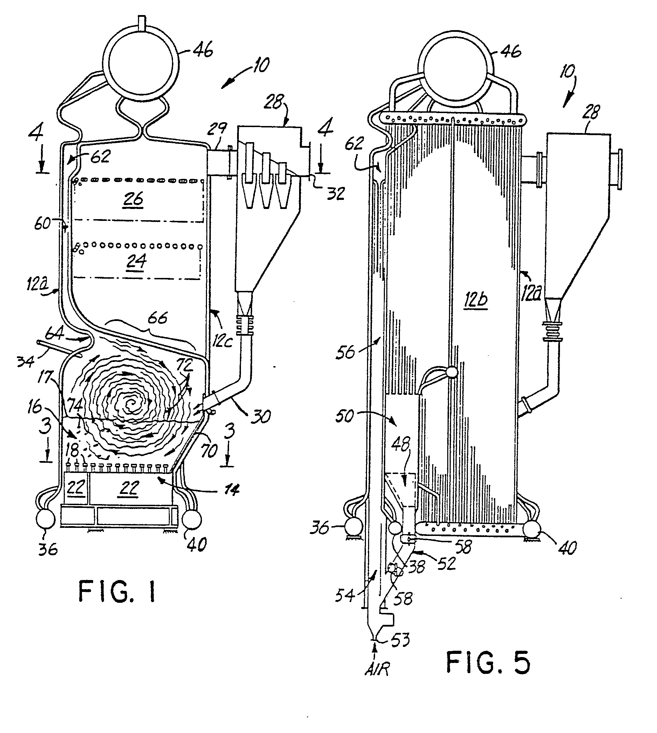

Turning now to the accompanying drawings, wherein like reference characters refer to like parts throughout the various views, there is shown an embodiment of a fluidized bed combustion boiler (indicated generally at 10) adapted to utilize the various features of the present invention. Referring particularly to Figure 1, the boiler 10 is formed with vessel walls having heat exchange tubes generally interconnected by webbing generally as described in my aforesaid '377 patent. There are four basic vessel walls, front wall 12a, side walls 12b and 12d (which mirror image each other) and back wall 12c.

The floor 14 of the boiler chamber is adapted to introduce an oxygen-containing fluidizing gas

(assumed here to be air) into the combustion zone (indicated generally at 16). As here embodied, the combustion chamber floor 14 includes gas introduction means in the form of a plurality of nozzles 18 formed on distributor plate 20 which is positioned on top of air plenum chambers 22 to form the floor of the combustion vessel. The plenum chambers are coupled to a source (not shown) of the fluidizing air in any conventional manner and nozzles 18 are of the bubble-cap type.

Above the bed are located evaporator screen tubes (described hereinafter) and, above them, a set of superheater heat exchange tubes (indicated generally at 24) for super heating the heat exchange medium (usually a fluid such as water) and economizer tubes (indicated at 26) for initial preheating of the heat exchange medium by the rising flue gases and particles entrained therein. It will be understood that any other desired heat exchange tube arrangements can be utilized above the combustion bed.

A gas-solids separator (here a cyclone separator) 28 is coupled (by conduit 29) to the boiler vessel 10 for removing any unspent bed particles which may be entrained in the flue gas rising from the bed and returning them to the fluidized combustion bed. To this end, separator 28 is coupled to reintroduction conduit 30 which discharges the separated out particles back into the fluidized bed, and an outlet 32 which leads the essentially particle-free flue gas to the exhaust stack or other flue gas exit of the facility. Of course, since tiny particulate matter such as fly ash will still be entrained in the flue gas, the cyclone treated gas should be subjected to a final "cleansing" action, such as passing through a "bag house", to filter out these superfine particles before expelling the flue gas into the atmosphere.

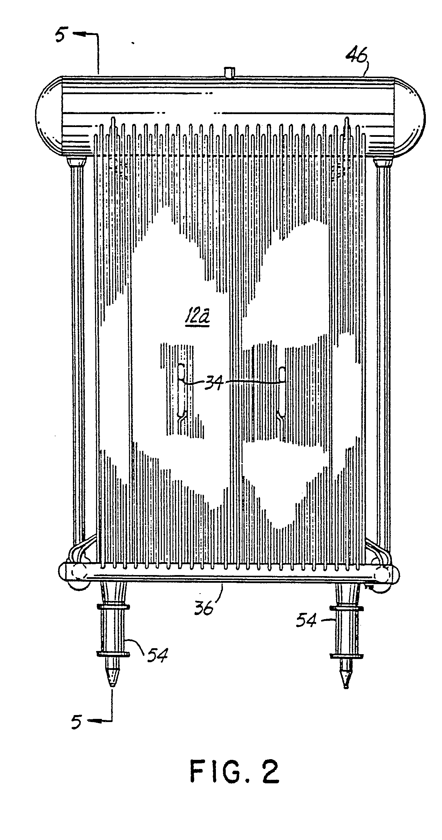

The fluidized bed combustion boiler also includes an inlet 54 (two are shown in Figure 2) for introducing fresh fuel and, as an aspect of the invention described below, finely divided particles of limestone. The walls of heat exchange tubes are coupled to various headers such as header segments 36 and 40 along the front and back chamber walls and header segments 42—45 along the vessel side walls, as well as steam-water separator boiler drum 46 at the top of the boiler. Another water header 38 is formed along the bottom inside of each upward flow heat exchange chamber segment, described more fully below.

According to one aspect of the present invention, a solids recirculation system is utilized similar to my aforesaid '377 patent. There is at least one quiescent zone (i.e., an area free of direct influence by the fluidizing gas) provided which is laterally offset from the main fluidized bed for enabling withdrawal of a portion of the fluidized bed constituents. As here preferably embodied, there are two such quiescent zones, each provided by a funnel-like withdrawal member 48 formed at the bottom of the off-set quiescent chamber housing 50 which is laterally offset from the main combustion bed. Each withdrawal member 48 is coupled by suitable conduit members (indicated generally at 52) to the base portion 54 of a vertically extending heat exchange chamber 56 which is generally like that disclosed in my aforesaid '377 patent. The base 54 of each vertical heat exchange chamber 56 preferably includes means for introducing air or a like oxygen containing gas for upward flow through the heat exchange chamber, and may include valve means (such as butterfly valves 58) for controlling the flow of solids through the heat exchanger, for the same purposes disclosed in my aforesaid '377 patent. The withdrawal conduit 52 may provide a generally U-shaped duct (as disclosed in my '377 patent) or it may generally form a more Y-shaped configuration with the base 54 of the vertical heat exchanger, as shown in Figure 5.

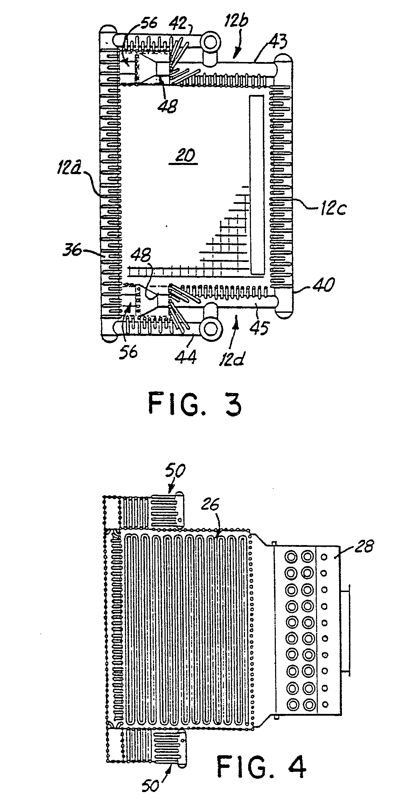

As here embodied, the upward-flow portion 56 of each vertical heat exchanger more-or-less extends along the exterior sides of the boiler vessel as best shown in Figures 3 and 5. The top of the upward-flow heat exchange chamber 56 opens into a downward-flow heat exchange chamber 60 (by an intermediate segment 62), much like my '377 patent. As here embodied, the downward-flow heat exchange chamber 60 extends along essentially the entire width of front wall 12a of the boiler vessel as shown in Figure 1. The up-flow portion 56 and the down flow portion 60 are formed primarily by walls of heat exchange tubes like those disclosed in my '377 patent. It will be understood that intermediate walls of heat exchange tubes can be placed within the down flow chamber 60 to form a plurality of smaller chambers for additional heat exchange surface area, similar to my '377 patent.

According to another aspect of the invention, the bottom, or discharge, portion (64) of downflow chamber 60 includes an arched portion providing a "slide" adapted to discharge particles in a generally horizontal direction. The lower "slide" portion of arch 64 is formed of the same webbed heat exchange tubes as segments 56 and 60, while the upper portion (indicated at 66 and comprising evaporator screen tubes) which extends directly over the bed should have openings or spaces between the heat exchange tubes to permit upward flow of flue gases yet act as another impingement barrier for particles entrained in the flue gases. As preferably embodied, the arched discharge duct 64 is on the same wall as fuel/limestone inlet 34 which is advantageously located just below the arched duct 64 and oriented to inject the fresh fuel particles (and limestone) in a generally horizontal direction to add momentum to the horizontal flow of discharged particles from arched duct 64.

According to still another aspect of the invention, a portion of the vessel containing wall opposite arched discharge duct 64 (i.e., back wall 12c) is sloped (as indicated at 70) towards the arched discharge duct to further enhance circulation of the constituents of the bed and at the same time reduce the expensive grid area for distributing air. As here embodied, sloped wall 70 is at an angle of from about 45° to about 75° (and preferably about 60°) with respect to the combustion chamber floor. Advantageously, the top of sloped wall 70 is just below the outlet of cyclone return duct 30 which, in turn, is somewhat below the arched discharge duct 64 so that the discharge flow from return duct 30 is very roughly tangential to the circulatory flow (indicated in Figure 1 by spiral-like lines 72) generated by the returning solids discharged from arched discharge outlet 64. It will similarly be understood that inlet 34 is advantageously oriented so that fresh fuel (and limestone particles) is injected roughly tangential to the circulatory flow lines 72 to help enhance the circulation.

The presence of the sloped wall 70 (which could also be curved to conform generally to the shape of circulatory flow 72) further aids circulatory flow in the combustion bed by eliminating the possible "dead spot" at the corner of the combustion bed floor directly opposite arched discharge duct 64. Although a similar wall could be provided at the opposite corner, it is not believed necessary because the gas distributing nozzles 18 under the arched section 64 do more to enhance the circulatory flow at that point by their upwardly directed gas flow.

In operation, the combustion bed constituents are fluidized by air forced through nozzles 18 from plenum chambers 22 to form fluidized bed 16 having a general level indicated at 17. After the fluidized bed has been fired up and has reached its desired operating temperature, the valve(s) 58 are opened in withdrawal duct 52 and air forced upwardly into chamber 54 through inlet 53, thereby causing a pressure differential between the upward-flow heat exchange chamber 56 and the fluidized bed 16. As a result, fluidized bed constituents in the vicinity of the quiescent chambers 50 are drawn off from the bed (which also enhances the lateral movements of the particles in the bed) and travel upwardly through chamber 56.

When the particles reach the top of chamber 56, they are forced through intermediate heat exchange chamber 62 and thence into down-flow chamber 60 which, advantageously, extends along the entire front wall 12a of the combustion chamber. The speed of the flowing particles tends to increase due to the influence of gravity so that they are discharged at a higher velocity than the riser section. The particle withdrawal and the up and down flows are generally similar in nature to that described in my aforesaid '377 patent.

The arched discharge outlet 64, preferably formed with a relatively gradual curvature to avoid any impeding effect on the particle flow but terminating with a relatively horizontal end segment, directs the returning particles in a generally horizontal direction. The vector resultant of the velocity of discharge and the downward influence of gravity generate a generally curved flow path of the particles as they increase their distance from the discharge outlet. As the particle flow nears the back vessel wall 12c, the particles are turned downwardly towards the bed, where the upward force from the fluidizing gas and the particles in the bed tends to turn the flow towards front vessel wall 12a. The net result is a circulatory influence on the main bed particles caused by the returning particles discharged from their flow through the heat exchange chambers. This additional agitation in the combustion bed helps improve combustion and, therefore, increases efficiency.

Because the quiescent chambers 50 and withdrawal assemblies 48/52 are laterally offset from the main combustion bed and not, therefore, directly under arched discharge duct 64, the returning particles discharged from duct 64 are essentially free of any influence from the quiescent chambers 50. In addition, and as an advantage of the additional inventive features disclosed herein, the somewhat horizontally oriented inlet 34, the cyclone return duct 30 and the sloped wall 70 each enhance the circulatory flow of returning particles. Operating experience has shown that essentially all combustion takes place within the bed as opposed to other fluidized bed combustion systems where an appreciable amount of combustion occurs in the free-board portion of the bed — i.e., immediately above the combustion bed — which reduces the ability to control combustion temperature and results in lower combustion efficiency.

The composition of the fluidized bed has been modified to improve performance greatly. Dispersed throughout the fluidized combustion bed are numerous relatively dense bead-like members (indicated at 74) made of a hard inert material, such as fused alumina beads, of an inventory of about 490 to 1960 Kg/square metre (100 to about 400 pounds per square foot). The beads preferably have substantially smooth surfaces to prevent erosion and are in the size range of 20 to 80 mesh and have a density of about 3.6 gm/cc.

The bead-like members 74 are dispersed generally evenly throughout the bed 16 so as to form one of the components of the withdrawn particulate flow through the heat exchange means. The beads act both as an additional heat exchange medium to transfer heat within the heat exchange chambers and as a grinding agent for the combustion bed constituents. The latter is particularly important because by grinding, and reducing the size of, the bed particles, the beads act to continuously renew fresh surface area of the reactive particles in the bed, particularly the fuel particles (e.g., coal) and the limestone particles.

Accordingly, already combusted surface portions of the fuel particles, in the form of ash, are ground off (and ground down) in the form of fine ash particles which are then entrained in the flue gas and can exit the combustion chamber for subsequent simple removal at the dust collection station of the flue gas exit. Equally significant is grinding effect on the limestone particles.

During fluidized combustion, the limestone serves to remove sulfur dioxide from the resultant gases of combustion. The basic reaction involves a calcining process at the surface of the limestone and simultaneously sulfating of the surface to calcium sulfate. The calcium sulfate coating acts like a protective barrier on the limestone to block any further reaction with the sulfurous gas to form calcium sulfate. The bead-like members according to the present invention provide a continuously functioning grinding means to grind off the calcium sulfate coating and expose fresh limestone surface for reacting with and capturing more sulfur dioxide. The resultant calcium sulfate can then be removed along with the fly ash and other fully spent particles at the dust collection station at the flue gas exit.

It will also be appreciated that the heat exchange circulation of beat-like members 74 with the other bed constituents helps prevent loss of unspent particles with the flue gas. As these particles are discharged from arched duct 64, they form a "cascade" of solid particles acts to force the larger (unspent) bed constituents which tend to rise from the combustion bed back into the bed.

Particularly advantageously when combined with the presence of bead-like members 72 in the bed, fine particles of fresh limestone are added directly to the combustion bed, preferably along with fresh fuel particles through inlet 34. The injection of fresh limestone replenishes the limestone which has already reacted with the sulfur dioxide to maintain a generally constant supply of reactable limestone in the combustion bed for maintaining continuous sulfur dioxide removal.

In combination with the bead-like members 72 in the bed, the continuous addition of fresh limestone obviates the need for "purging" the combustion bed as is required in conventional fluidized bed combustion. Thus, the known disadvantages of such "purging" are completely eliminated. There is no need for a wasteful continuous removal of the bed constituents which results in some loss of good fuel and unreacted limestone. Furthermore, the problem of handling these materials, including leaching in the aguifer when they are dumped, are completely eliminated.

The illustrated embodiment assists in providing heat exchange contact between constituents from the combustion bed and physically separated heat exchange means so as to ensure that the rate of heat exchange may be varied while at the same time constant temperature is maintained within the burning zone. Additionally, fluidized bed combustion is improved by generating increased and, therefore, thorough circulation of bed constituents in the combustion bed. At the same time, even distribution of the bed constituents is produced so as not only to increase efficiency of combustion but also to enhance reactions in the bed such as the reaction of sulfur dioxide with limestone.

## Claims

1. A fluidized bed combustion apparatus having a combustion chamber (16) adapted to provide a fluidized bed of particulate matter, including combustible fuel particles, generally supported on a support member (20) adapted to permit introduction of a fluidizing gas medium into the particulate matter and an inlet (34) for introducing at least fresh combustible fuel particles into the fluidized bed, heat exchange means generally separated from the fluidized bed, said heat exchange means including communicating up-flow and down-flow portions (56, 60) for permitting circulation of particulate matter from the fluidized bed, through said heat exchange means and back into the fluidized bed, said down flow portion (60) having a discharge outlet opening to the combustion chamber (16) which discharge outlet is arranged to direct particulate matter passing down the down-flow portion (60) in a generally horizontal direction over the fluidized bed and withdrawal means (48, 52, 53) for withdrawing some of the particulate matter from the fluidized bed and introducing withdrawn particulate matter into said up-flow portion (56) of said heat exchange means, characterised in that the location or locations at which the withdrawn particulate matter is inducted into the withdrawal means from the fluidized bed are offset laterally from the discharge outlet and in that the arrangement is such that the particulate matter returned to the fluidized bed through the discharge outlet promotes a circulatory movement of the fluidized bed.

2. Apparatus according to Claim 1, characterised in that said withdrawal means includes a quiescent zone (50) adjacent the fluidized bed, generally undisturbed by direct exposure to the fluidizing gas medium, and conduit means (52, 54) providing flow communication between said quiescent zone and said up-flow heat exchange portion (56).

3. Apparatus according to Claim 2, characterised in that said quiescent zone (50) is formed by a generally separate chamber-like compartment adjacent the fluidized bed.

4. Apparatus according to Claim 2 or Claim 3, characterised in that said conduit means is controllable to control rate of particle flow therethrough.

5. Apparatus according to Claim 4, characterised in that said withdrawal means further includes means (53) for introducing gas upwardly through said up-flow portion (56) of said heat exchange means.

6. Apparatus according to any one of Claims 1 to 5, characterised in that said up-flow heat exchange portion (56) is formed in two parts extending in parallel and coupled to the same down-flow heat exchange portion (60).

7. Apparatus according to any one of Claims 1 to 6, characterised in that said down-flow heat exchange portion extends generally across the width of a wall (12a) of said combustion chamber (16).

8. Apparatus according to any one of claims 1 to 7, characterised in that said combustion chamber (16) includes a sloped wall portion (70) generally opposite said discharge outlet to facilitate the circulatory influence on the fluidized bed by particles being discharged from said discharge outlet.

9. Apparatus according to any one of Claims 1 to 9, characterised in that the fresh fuel particle inlet (34) is located generally adjacent said discharge outlet and is oriented generally horizontally such that fresh fuel particles injected into said combustion chamber generally add momentum to particulate matter being discharged from said discharge outlet so as to enhance the circulatory influence thereof on the fluidized bed.

10. Apparatus according to any one of Claims 1 to 9, which further includes gas/solids separator means (28) adapted to remove particles entrained in heated flue gases rising from the fluidized bed and return removed particles to the fluidized bed, said separator means including return means (30) for returning removed solids back into the fluidized bed, in a direction generally adapted to enhance the circulatory influence of particulate matter issuing from said discharge outlet.

11. Apparatus according to any one of Claims 1 to 10, characterised in that said down-flow heat exchange portion includes a segment of screen heat exchange means (66) extending generally over the fluidized bed, said screen heat exchange means permitting upward flow of heated flue gases rising from the bed, but acting as an impingement barrier to particles entrained in flue gases rising from the bed in addition to providing heat exchange function.

12. Apparatus according to any one of Claims 1 to 11, characterised in that the particulate matter in the fluidized bed includes a plurality of relatively dense bead-like particles made of generally inert material, said bead-like particles being dispersed generally throughout the bed to act as a grinding agent to partially reacted particulate matter in the bed.

13. Fluidized bed combustion apparatus having a combustion chamber (16) adapted to provide a fluidized bed of particulate matter, including combustible fuel particles, generally supported on a support member (20) adapted to permit introduction of a fluidizing gas medium into the particulate matter and an inlet (34) for introducing at least fresh combustible fuel particles into the fluidized bed, characterised in that a plurality of relatively dense bead-like particles are dispersed generally throughout the fluidized bed to act as a grinding agent to partially reacted particulate matter in the bed, and in that means is provided for withdrawing said bead-like particles and other fluidized bed particles from the fluidized bed and returning them to said bed, the location or locations at which the particles are withdrawn being laterally offset from the location or locations at which the particles are returned to the fluidized bed.

14. Apparatus according to Claim 12 or Claim 13, wherein each said bead-like particle is substantially smooth to reduce the rate of erosion of the bead-like particles.

15. Apparatus according to any one of claims 12 to 14 which further includes means (14) for introducing relatively fine particles of limestone into the fluidized bed.

16. Apparatus according to Claim 16, characterised in that said limestone particle introduction means comprises the inlet (14) for fresh fuel particles.

17. An improved apparatus according to any one of Claims 12 to 16 characterised in that said bead-like particles are in the size range of about 20 to about 80 mesh.

18. A method of carrying out fluidized bed combustion and transfer of heat generated from combustion of the fluidized bed, comprising the steps of providing for withdrawal of some particulate matter from the fluidized bed and causing the withdrawn particulate matter to flow through heat exchange means generally separated from the fluidized bed and back to the fluidized bed, characterised in that said particulate matter is withdrawn from the fluidized bed at a location generally laterally spaced from where the withdrawn particulate matter is discharged from the heat exchange means (56, 60) and in that the withdrawn particulate matter leaving the heat exchange means in discharged in a generally horizontal direction over the fluidized bed, the arrangement being such that particulate matter discharged from the heat exchange means is generally unaffected by the withdrawal of particulate matter and provides circulatory movement of the fluidized bed.

19. A method according to Claim 18, characterised in that the withdrawn particulate matter flows in generally vertical directions through the heat exchange means.

20. A method according to Claim 18 or Claim 19, characterised in that said step of withdrawing particulate matter from the fluidized bed is carried out through a quiescent zone (50), generally undisturbed directly by fluidizing gas medium, adjacent the fluidized bed and through conduit means (52) providing flow communication between the quiescent zone and the heat exchange means (56, 60).

21. A method according to any one of Claims 18 to 20, characterised in that particulate matter is withdrawn from at least two different areas of the fluidized bed.

22. A method according to any one of Claims 18 to 21, which further includes introducing fresh fuel particles into the fluidized bed in a direction adapted to enhance the circulatory influence generated by particles discharged from the heat exchange means.

23. A method according to Claim 22, which further includes the step of removing particulate matter entrained in flue gases rising from the fluidized bed from the flue gases and re-introducing the removed particles back into the fluidized bed in a direction adapted to enhance said circulatory influence.

24. A method according to any one of Claims 18 to 23 which further includes forming a generally sloped wall segment (70) generally opposite discharge outlet of the heat exchange means.

25. A method according to any one of Claims 18 to 24 characterised in that the particulate matter in the fluidized bed includes a plurality of relatively dense bead-like particles made of generally inert material, said bead-like particles being dispersed generally throughout the bed to act as a grinding agent to partially reacted particulate matter in the bed.

26. A method of carrying out fluidized bed combustion, characterised in that a plurality of relatively dense bead-like generally inert particles are provided which are dispersed generally throughout the fluidized bed, such that the bead-like particles act as a grinding agent to partially reacted particulate matter in the bed, a proportion of said bead-like particles being withdrawn from said bed with other particulate matter from the bed and returned to said bed, the location or locations of withdrawal of the particles being laterally offset from the location or locations at which the particles are withdrawn.

27. A method according to Claim 25 or Claim 26 characterised in that said bead-like particle is substantially smooth to reduce the rate of erosion of the bead-like particles.

28. A method according to any one of Claims 25 to 27, characterised in that relatively fine particles of limestone are introduced into the fluidized bed.

29. A method according to Claim 28, characterised in that said limestone particles are introduced into the combustion zone through the inlet for fresh fuel particles.

30. A method according to any one of Claims 25 to 29, characterised in that said bead-like particles are in the size range of about 20 to about 80 mesh.

**Patentansprüche**

1. Wirbelbett-Verbrennungsapparat, mit einer Verbrennungskammer (16), die geeignet ist ein Wirbelbett von Partikelmaterie bzw. Stoff zu schaffen, mit brennbaren Kraftstoffpartikeln, die im allgemeinen auf einem Trägergleid (20) gelagert sind und die geeignet sind, das Einbringen eines Wirbelgasmediums in den Partikelstoff zu gestatten, und mit einem Einlaß (34) zum Einführen zumindest von frischen brennbaren Kraftstoffpartikeln in das Wirbelbett, mit einer Wärmeaustauscheinrichtung, welche im allgemeinen vom Wirbelbett getrennt ist, wobei die Wärmeaustauscheinrichtung übertragende Aufwärtsfluß- und Abwärtsflußbereiche (56, 60) aufweist, um die Zirkulation des Partikelstoffes vom Wirbelbett zu gestatten, und zwar über die Wärmeaustauscheinrichtung und zurück in das Wirbelbett, wobei der Abwärtsflußbereich (60) eine Entleerungsauslaßöffnung zur Brennkammer (16) aufweist, wobei der Abgabeauslaß ausgebildet ist, um den Partikelstoff, der durch den Abwärtsflußbereich (60) nach unten gelangt, in eine im wesentlichen horizontale Richtung über das Wirbelbett zu richten, und mit einer Entnahmeeinrichtung (48, 52, 53) zur Entnahme von Partikelstoff aus dem Wirbelbett und zur Eingabe von entnommenem Partikelstoff in den Aufwärtsflußbereich (56) der Wärmeaustauscheinrichtung, dadurch gekennzeichnet, daß die Stelle oder die Stellen, an denen der entnommene Partikelstoff in die Entnahmeeinrichtung aus dem Wirbelbett eingeführt wird, seitlich gegenüber dem Entleerungsauslaßversetzt sind und daß die Anordnung derart ist, daß der Partikelstoff, der zum Wirbelbett über den Entleerungsauslaß zurückgekehrt ist, eine zirkulierende Bewegung des Wirbelbettes fördert bzw. unterstützt.

2. Apparat nach Anspruch 1, dadurch gekennzeichnet, daß die Entnahmeeinrichtung eine ruhige Zone (50) aufweist, welche im allgemeinen durch direkte Aussetzung gegenüber dem Wirbelgasmedium ungestört ist und daß eine Leitungseinrichtung (52, 54) vorgesehen ist, welche eine Flußverbindung zwischen der Ruhezone und dem Aufwärtsfluß-Wärmeaustauschbereich (56) schafft.

3. Apparat nach Anspruch 2, dadurch gekennzeichnet, daß die Ruhezone (50) durch ein im allgemeinen getrenntes kammerartiges Abteil gegenüberliegend dem Wirbelbett gebildet ist.

4. Apparat nach Anspruch 2 oder 3, dadurch gekennzeichnet, daß die Leitungseinrichtung steuerbar ist, um den Betrag des Partikelflusses durch diese zu steuern.

5. Apparat nach Anspruch 4, dadurch gekennzeichnet, daß die Entnahmeeinrichtung außerdem eine Einrichtung (53) zum Einführen von Gas aufwärts durch den Aufwärtsflußbereich (56) der Wärmeaustauscheinrichtung aufweist.

6. Apparat nach einem der Ansprüche 1 bis 5, dadurch gekennzeichnet, daß der Aufwärtsfluß-Wärmeaustauschbereich (56) in zwei Teile unterteilt ist, welche sich parallel erstrecken und welche mit dem gleichen Abwärtsfluß-Wärmeaustauschbereich (60) gekoppelt sind.

7. Apparat nach irgendeinem der Ansprüche 1 bis 6, dadurch gekennzeichnet, daß der Abwärtsfluß-Wärmeaustauschbereich sich im allgemeinen quer zur Breite einer Wand (12a) der Verbrennungskammer (16) erstreckt.

8. Apparat nach irgendeinem der Ansprüche 1 bis 7, dadurch gekennzeichnet, daß die Verbrennungskammer (16) einen geneigten oder schrägen Wandbereich (70) aufweist, welcher im allgemeinen gegenüberliegend dem Entleerungsauslaß angeordnet ist, um den zirkulatorischen Einfluß auf das Wirbelbett durch die Partikel zu erleichtern, welche von dem Entleerungsauslaß entleert werden.

9. Apparat nach einem der Ansprüche 1 bis 8, dadurch gekennzeichnet, daß der Frisch-Kraftstoffpartikeleinlaß (34) im allgemeinen benachbart dem Entleerungsauslaß angeordnet ist, und im allgemeinen horizontal orientiert order ausgerichtet ist, so daß die Frisch-Kraftstoffpartikel, die in die Verbrennungskammer injiziert werden, im allgemeinen kinetische Energie dem Partikelstoff hinzufügen, welche aus dem Entleerungsauslaß entladen bzw. entleert werden, um so ihren zirkulatorischen Einfluß auf das Wirbelbett zu verstärken bzw. zu verbessern.

10. Apparat nach einem der Ansprüche 1 bis 9, dadurch gekennzeichnet, daß er außerdem eine Gas/Feststofftrenneinrichtung (28) aufweist, die geeignet ist, um Partikel zu entfernen, welche in erwärmten Abgasen mitgerissen wurden, welche vom Wirbelbett aufsteigen, und um entfernte Partikel in das Wirbelbett rückzuführen, wobei die Trenneinrichtung eine Rückführeinrichtung (30) zur Rückführung von entfernter Festmaterie in das Wirbelbett aufweist, und zwar in einer Richtung, die im allgemeinen geeignet ist, den zirkulatorischen Einfluß des Partikelstoffes zu verstärken, welcher von dem Entleerungsauslal ausgeht.

11. Apparat nach einem der Ansprüche 1 bis 10, dadurch gekennzeichnet, daß der Abwärtsfluß-Wärmeaustauschbereich ein Segment einer Schirmwärmeaustauscheinrichtung (66) aufweist, daß sich im allgemeinen über dem Wirbelbett erstreckt, wobei die Schirmwärmeaustauschinrichtung einen Aufwärtsfluß der erwärmten Abgase erlaubt, die vom Bett aufsteigen, jedoch als eine Aufprallbarriere für Partikel dient, welche in Abgasen mitgerissen werden, welche aus dem Bett aufsteigen zusätzlich zur Schaffung der Wärmeaustauschfunktion.

12. Apparat nach einem der Ansprüche 1 bis 11, dadurch gekennzeichnet, daß der Partikelstoff im Wirbelbett eine Vielzahl von relativ dichten perlenähnlichen Partikeln aufweist, die aus im allgemeinen inertem bzw. neutralem Material hergestellt sind, wobei die perlenähnlichen Partikel generell über das Bett verteilt sind, um als ein Schleifoder Mahlmittel auf den zum Teil in Reaktion gebrachten Partikelstoff im Bett zur wirken.

13. Wirbelbett-Verbrennungsapparat mit einer Verbrennungskammer (16), die geeignet ist, ein Wirbelbett von Partikelstoff zu liefern, mit brennbaren Kraftstoffpartikeln, welche im allgemeinen auf einem Trägerglied (20) gelagert sind, das geeignet ist, um die Einführung eines Wirbelgasmediums in den Partikelstoff zu gestatten sowie einen Einlaß (34), um zumindest frische brennbare Kraftstoffpartikel in das Wirbelbett einzuführen, dadurch gekennzeichnet, daß eine Vielzahl von relativ dichten perlenähnlichen Partikeln im allgemeinen über das Wirbelbett verteilt sind, um als Mahl- oder Schleifmittel auf den zum Teil in Reaktion gebrachten Partikelstoff im Bett zu bringen und daß eine Einrichtung vorgesehen ist, um die perlenähnlichen Partikel und andere Wirbelbettpartikel vom Wirbelbett zu entnehmen, und um sie zum Bett zurückzuführen, wobei die Stelle bzw. die Stellen, an denen die Partikel entnommen werden, seitlich von der Stelle oder den Stellen versetzt ist, an denen die Partikel zum Wirbelbett zurückgeführt werden.

14. Apparat nach Anspruch 12 oder 13, dadurch gekennzeichnet, daß jedes perlenähnliche Teil im wesentlichen geglättet ist, um den Wert der Erosion der perlenähnlichen Partikel zu verringern.

15. Apparat nach einem der Ansprüche 12 bis 14, dadurch gekennzeichnet, daß er außerdem eine Einrichtung (14) zum Einführen von relativ feinen Partikeln von Kalkstein in das Wirbelbett aufweist.

16. Apparat nach Anspruch 15, dadurch gekennzeichnet, daß die Kalksteinpartikeleinführeinrichtung einen Einlaß (14) für Frisch-Kraftstoffpartikel enthält.

17. Apparat nach einem der Ansprüche 12 bis 16, dadurch gekennzeichnet, daß die Perlenähnlichen Partikel im Größenordnungsbereich von ungefähr 20 bis 80 mesh sind.

18. Verfahren zur Durchführung der Wirbelbett-Verbrennung und übertragung von Wärme, die bei der Verbrennung des Wirbelbettes entsteht, umfassend den Schritt der Entnahmemöglichkeit von Partikelstoff aus dem Wirbelbett sowie einen weiteren Schritt, um zu veranlassen, daß der entnommene Partikelstoff durch die Wärmeaustauschrinrichtung fließt, und zwar im allgemeinen getrennt vom Wirbelbett und zurück zum Wirbelbett, dadurch gekennzeichnet, daß der Partikelstoff vom Wirbelbett an einer Stelle entnommen wird, die im allgemeinen seitlich entfernt ist von einer Stelle, wo der entnommene Partikelstoff aus der Wärmeaustauscheinrichtung (56, 60) entleert wird und daß der entnommene Partikelstoff, welcher die Wärmeaustauscheinrichtung verläßt, in einer im wesentlichen horizontalen Richtung über dem Wirbelbett entleert wird, wobei die Anordnung derart ist, daß der Partikelstoff, welcher aus der Wärmeaustauscheinrichtung entleert wird, im allgemeinen durch die Entnahme des Partikelstoffes unbeeinflußt ist und eine zirkulatorische Bewegung des Wirbelbettes bewirkt.

19. Verfahren nach Anspruch 18, dadurch gekennzeichnet, daß der entnommene Partikelstoff in im allgemeinen vertikalen Richtungen durch die Wärmeaustauscheinrichtung fließt.

20. Verfahren nach Anspruch 18 oder 19, dadurch gekennzeichnet, daß der Schritt der Entnahme von Partikelstoff aus dem Wirbelbett durch eine Ruhezone (50) ausgeführt wird, die im allgemeinen direkt ungestört ist durch Wirbelgasmedium, benachbart dem Wirbelbett, sowie durch eine Leitungseinrichtung (52), welche für eine Flußßverbindung zwischen der Ruhezone und der Wärmeaustauscheinrichtung (56, 60) sorgt.

21. Verfahren nach einem der Ansprüche 18 bis 20, dadurch gekennzeichnet, daß der Partikelstoff von zumindest zwei underschiedlichen Gebeiten des Wirbelbettes entnommen wird.

22. Verfahren nach einem der Ansprüche 18 bis 21, dadurch gekenneichnet, daß es außerdem das Einführen von frischen Kraftstoffpartikeln in das Wirbelbett umfaßt und zwar in einer Richtung, die geeignet ist, um den zirkulatorischen Einfluß zu verstärken, der durch Partikel erzeugt wird, die von der Wärmeaustauscheinrichtung entleert werden.

23. Verfahren nach Anspruch 22, dadurch gekennzeichnet, daß es außerdem den Schritt des Entfernens von Partikelstoff, die in Abgasen mitgerissen werden, die aus dem Wirbelbett aufsteigen, aus den Abgasen und Rückführung der entfernten Partikel zurück in das Wirbelbett in einer Richtung umfaßt, die geeignet ist, um den zirkulatorischen Einfluß zu verstärken.

24. Verfahren nach einem der Ansprüche 18 bis 23, dadurch gekennzeichnet, daß es außerdem die Bildung eines im allgemeinen geneigten Wandbereiches (70) einschließt, der im allgemeinen gegenüberliegend dem Entleerungsauslaß der Wärmeaustauscheinrichtung angeordnet ist.

25. Verfahren nach irgendeinem der Ansprüche 18 bis 24, dadurch gekennzeichnet, daß der Partikelstoff im Wirbelbett eine Vielzahl von relativ dichten perlenähnlichen Partikeln aufweist, die aus im allgemeinen inerten oder trägem Material bestehen, wobei die perlenähnlichen Partikel im allgemeinen über das Bett verteilt sind und als ein Mal- oder Schleifmittel auf den zum Teil in Reaktion gebrachten Partikelstoff im Bett wirken.

26. Verfahren zur Ausführung einer Wirbelbett-Verbrennung, dadurch gekennzeichnet, daß eine Vielzahl von relativ dichten perlenähnlichen, im allgemeinen inerten Partikeln vorgesehen sind, welche im allgemeinen über das Wirbelbett verteilt sind, so daß die perlenähnlichen Partikel als Schleif- oder Mahlmittel auf den zum Teil in Reaktion gebrachten Partikelstoff im Bett wirken, wobei ein Mengenanteil der perlenähnlichen Partikel vom Bett mit anderem Partikelstoff vom Bett entnommen und zum Bett zurückgebracht werden, wobei die Stelle oder die Stellen der Entnahme der Partikel seitlich versetzt sind gegenüber der Stelle oder den Stellen, an denen die Partikel entnommen werden.

27. Verfahren nach Anspruch 25 oder 26, dadurch gekennzeichnet, daß das perlenähnliche Teil im wesentlichen glatt oder geglättet ist, um den Betrag der Erosion der perlenähnlichen Partikel zu verringern.

28. Verfahren nach einem der Ansprüche 25 bis 27, dadurch gekennzeichnet, daß relative feine Partikel aus Kalkstein in das Wirbelbett eingeführt werden.

29. Verfahren nach Anspruch 28, dadurch gekennzeichnet, daß die Kalksteinpartikel in die Verbrennungszone durch den Einlaß für frische Kraftstoffpartikel eingeführt werden.

30. Verfahren nach einem der Ansprüche 25 bis 29, dadurch gekennzeichnet, daß die perlenähnlichen Partikel im Größenordnungsbereich von ungefähr 20 bis 80 mesh liegen.

**Revendications**

1. Appareil de combustion à lit fluidisé comportant une chambre de combustion (16) adaptée pour former un lit fluidisé de particules de matiére, notamment des particules de combustible, généralement supporté sur un élément porteur (20) adapté pour permettre une introduction d'un agent gazeux de fluidisation dans les particules de matière et une entrée (34) pour introduire au moins des particules de combustible frais dans le lit fluidisé, un moyen d'échange de chaleur généralement séparé du lit fluidisé, ledit moyen d'échange de chaleur comprenant des parties de communication d'écoulement ascendant et d'écoulement descendant (56, 60) pour permettre une circulation des particules de matière á partir du lit fluidisé, au travers dudit moyen d'échange de chaleur et en retour dans le lit fluidisé, ladite partie d'écoulement descendant (60) comportant un orifice de sortie se déchargeant dans la chambre de combustion (16), cet orifice de décharge étant agencé pour diriger des particules de matière s'écoulant vers le bas dans la partie d'ecoulement descendant (60) dans une direction généralement horizontale sur le lit fluidisé et des moyens d'évacuation (48, 52, 53) pour évacuer une partie des particules de matière du lit fluidisé et pour introduire les particules évacuées dans ladite partie d'ecoulement ascendent (56) dudit moyen d'échange de chaleur, caractérisé en ce que la ou les positions dans lesquelles les particules évacuées sont introduites dans les moyens d'évacuation à partir du lit fluidisé sont décalées latéralement par rapport á la sortie de décharge et en ce que l'agencement est tel que les particules de matière revenant dans le lit fluidisé par l'intermédiaire de la sortie de décharge favorisent un mouvement circulatoire du lit fluidisé.

2. Appareil selon la revendication 1, caractérisé en ce que lesdits moyens d'évacuation comprennent une zone calme (50) adjacente au lit fluidisé, qui n'est généralement pas perturbée par une exposition directe à l'agent gazeux de fluidisation, et un conduit (52, 54) établissant une communication fluidique entre ladite zone calme et ladite partie d'échange de chaleur à écoulement ascendant (56).

3. Appareil selon la revendication 2, caractérisé en ce que ladite zone calme (50) est formée par un compartiment généralement séparé en forme de chambre qui est adjacent au lit fluidisé.

4. Appareil selon la revendication 2 ou la revendication 3, caractérisé en ce que ledit conduit peut être commandé pour contrôler le débit de particules passant dans celui-ci.

5. Appareil selon la revendication 4, caractérisé en ce que lesdits moyens d'évacuation comprennent en outre un moyen (53) pour introduire du gaz vers le haut dans ladite partie à écoulement ascendant (56) dudit moyen d'échange de chaleur.

6. Appareil selon une quelconque des revendications 1 à 5, caractérisé en ce que ladite partie d'échange de chaleur à écoulement ascendant (56) est divisée en deux portions qui sont placées parallèlement et qui sont reliées à la même partie d'échange de chaleur à d'écoulement descendant (60).

7. Appareil selon une quelconque des revendications 1 à 6, caractérisé en ce que ladite partie d'échange de chaleur à écoulement descendant s'étend dans l'ensemble sur la largeur d'une paroi (12a) de ladite chambre de combustion (16).

8. Appareil selon une quelconque des revendications 1 à 7, caractérisé en e que ladite chambre de combustion (16) comporte une partie de paroi inclinée (70) généralement opposée à ladite sortie de décharge afin de faciliter l'influence circulatoire exercée sur le lit fluidisé par des particules qui sont déchargées par ladite sortie de décharge.

9. Appareil selon une quelconque des revendications 1 à 9, caractérisé en ce que l'entrée de particules de combustible frais (34) est placée généralement dans une zone adjacente à ladite sortie de décharge et est orientée généralement horizontalement de telle sorte que des particules de combustible frais injectées dans ladite chambre de combustion augmentent généralement la force vive des particules de matière qui sont en train d'être déchargées de ladite sortie de décharge en vue d'améliorer ainsi l'influence circulatoire exercée par elles sur le lit fluidisé.

10. Appareil selon une quelconque des revendications 1 à 9, qui comprend en outre un moyen séparateur de gaz/solides (28) adapté pour enlever des particules entraînées dans des fumées chaudes s'élevant à partir du lit fluidisé et pour renvoyer les particules enlevées dans le lit fluidisé, ledit moyen séparateur comprenant un moyen de retour (30) pour renvoyer des solides enlevés dans le lit fluidisé, dans une direction généralement adaptée pour améliorer l'influence circulatoire de particules de matière provenant de ladite sortie de décharge.

11. Appareil selon une quelconque des revendications 1 à 10, caractérisé en ce que ladite partie d'échange de chaleur à écoulement descendant comprend un moyen d'échange de chaleur à segment d'écran (66) s'étendant dans l'ensemble au-dessus du lit fluidisé, ledit moyen d'échange de chaleur à écran permettant un écoulement ascendant de fumées chauffées s'élevant à partir du lit mais agissant comme une barrière pour des particules entraînées dans les fumées s'élevant à partir du lit en remplissant en outre une fonction d'échange de chaleur.

12. Appareil selon une quelconque des revendications 1 à 11, caractérisé en ce que les particules de matière se trouvant dans le lit fluidisé comprennent une pluralité de particules analogues à des perles, relativement denses et formées d'une matière généralement inerte, lesdites particules analogues à des perles étant dispersées dans l'ensemble au travers du lit de façon à agir comme un agent de broyage sur des particules ayant partiellement réagi dans le lit.

13. Appareil de combustion à lit fluidisé comportant une chambre de combustion (16) adaptée pour former un lit fluidisé de particules de matière, notamment des particules de combustible, généralement supporté sur un élément porteur (20) adapté pour permettre une introduction d'un agent gazeux de fluidisation dans les particules de matière et une entrée (34) pour introduire au moins des particules de combustible frais dans le lit fluidisé, caractérisé en ce qu'une pluralité de particules relativement denses en forme de perles sont dispersées dans l'ensemble au travers du lit fluidisé de manière à agir comme un agent de broyage sur les particules de matière ayant partiellement réagi dans le lit, et en ce qu'il est prévu un moyen pour évacuer lesdites particules en forme de perles et d'autres particules du lit fluidisé hors du lit fluidisé pour les réintroduire dans ledit lit, la ou les positions où les particules sont évacuées étant décalées latéralement par rapport à la ou aux positions où les particules sont renvoyées dans le lit fluidisé.

14. Appareil selon la revendication 12 ou la revendication 13, dans lequel chacune desdites particules en forme de perles est sensiblement lisse pour réduire le taux d'érosion des particules en forme de perles.

15. Appareil selon une quelconque des revendications 12 à 14, qui comprend en outre un moyen (14) pour introduire des particules relativement fines de pierre à chaux dans le lit fluidisé.

16. Appareil selon la revendication 16, caractérisé en ce que le moyen d'introduction de particules de pierre à chaux comprend l'entrée (14) de particules de combustible frais.

17. Un appareil perfectionné conforme à une quelconque des revendications 12 à 16, caractérisé en ce que lesdites particules en forme de perles ont des dimensions entrant dans la plage comprise entre environ 0,2 et 0,8 mm.

18. Un procédé pour assurer la combustion d'un lit fluidisé et le transfert de la chaleur engendrée par la combustion du lit fluidisé, comprenant les étapes consistant à évacuer certaines particules de matière du lit fluidisé et à obliger les particules de matière évacuées à s'écouler dans un moyen d'échange de chaleur généralement séparé du lit fluidisé et à les faire revenir dans le lit fluidisé, caractérisé en ce que lesdites particules de matière sont évacuées du lit fluidisé en un endroit espacé généralement lateralement de celui où les particules de matière sont déchargées du moyen d'échange de chaleur (56, 60) et en ce que les particules de matière évacuées et sortant du moyen d'échange de chaleur sont déchargées dans une direction généralement horizontale sur le lit fluidisé, l'agencement étant tel que des particules de matière déchargées du moyen d'échange de chaleur ne soient généralement pas affectées par l'évacuation de particules de matière et établissent un mouvement circulatoire du lit fluidisé.

19. Un procédé selon la revendication 18, caractérisé en ce que les particules de matière évacuées s'écoulent dans des directions verticales dans l'ensemble au travers du moyen d'échange de chaleur.

20. Un procédé selon la revendication 18 ou la revendication 19, caractérisé en ce que ladite étape d'évacuation de particules de matière à partir du lit fluidisé est effectuée par l'intermédiaire d'une zone calme (50), gefnéralement non perturbée directement par un agent gazeux de fluidisation, adjacente au lit fluidisé, et par l'intermédiaire d'un conduit (52) établissant une communication fluidique entre la zone calme et le moyen d'échange de chaleur (56, 60).

21. Un procédé selon une quelconque des revendications 18 à 20, caractérisé en ce que les particules de matière sont évacuées d'au moins deux zones différentes du lit fluidisé.

22. Un procédé selon une quelconque revendications 18 à 21, qui consiste en outre à introduire des particules de combustible frais dans le lit fluidisé dans une direction adaptée pour améliorer l'influence circulatoire engendrée par des particules déchargées du moyen d'échange de chaleur.

23. Un procédé selon la revendication 22, qui comprend l'étape consistant à enlever des particules de matière, entraînées dans des fumées montant du lit fluidisé, à partir desdites fumées et pour réintroduire les particules enlevées en retour dans le lit fluidisé dans une direction adaptée pour améliorer ladite influence circulatoire.

24. Un procédé selon une quelconque des revendications 18 à 23, qui consiste en outre à former un segment de paroi incliné dans l'ensemble (70) qui est placé généralement à l'opposé de la sortie de décharge dudit moyen d'échange de chaleur.

25. Un procédé selon une quelconque des revendications 18 à 24, caractérisé en ce que les particules de matière se trouvant dans le lit fluidisé comprennent une pluralité de particules en forme de perles relativement denses et constituées d'une matière généralement inerte, lesdites particules en forme de perles étant dispersées dans l'ensemble du lit de manière à agir comme un agent de broyage sur des particules de matière ayant partiellement réagi dans le lit.

26. Un procédé pour effectuer une combustion d'un lit fluidisé, caractérisé en ce qu'une pluralité de particules généralement inertes, en forme de perles et relativement denses sont dispersées dans l'ensemble dans le lit fluidisé de telle sorte que les particules en forme de perles agissent comme un agent de broyage sur des particules de matière ayant partiellement réagi dans le lit, une proportion desdites particules en forme de perles étant évacuées dudit lit avec d'autres particules de matière provenant du lit et étant renvoyées dans ledit lit, l'endroit ou les endroits d'enlèvement des particules étant décalés latéralement par rapport à l'endroit ou aux endroits où les particules sont renvoyées dans le lit.

27. Un procédé selon la revendication 25 ou la revendication 26, caractérisé en ce que lesdites particules en forme de perles sont sensiblement lisses pour réduire le taux d'érosion des particules en forme de perles.

28. Un procédé selon une quelconque des revendications 25 à 27, caractérisé en ce que des particules de pierre à chaux relativement fines sont introduites dans le lit fluidisé.

29. Un procédé selon la revendication 28, caractérisé en ce que lesdites particules de pierre à chaux sont introduites dans la zone de combustion par l'intermédiaire de l'entrée de particules de combustible frais.

30. Un procédé selon une quelconque des revendications 25 à 29, caractérisé en ce que lesdites particules en forme de perles ont des dimensions rentrant dans la plage comprise entre environ 0,2 et 0,8 mm.

0 082 622

FIG. 1

FIG. 5

FIG. 2

FIG. 3

FIG. 4